# EUROPÄISCHE PATENTSCHRIFT

(11) **EP 3 339 054 B1**
(45) Veröffentlichungstag und Bekanntmachung des Hinweises auf die Patenterteilung: **27.03.2019**
(21) Anmeldenummer: 16002753.8
(22) Anmeldetag: 23.12.2016
(51) Int. Cl.: B60B 27/00, B60B 27/02, F16C 33/78

(54) **FAHRRADNABE MIT DICHTAPPARAT UND GESCHLITZTER KLEMME**
BICYCLE HUB WITH SEALING DEVICE AND SPLITTED CLAMP
MOYEU DE VÉLO AYANT UN DISPOSITIF D'ÉTANCHÉITÉ ET UNE BRIDE DE SERRAGE FENDUE

(43) Veröffentlichungstag der Anmeldung: 27.06.2018
(73) Patentinhaber: Klieber, Jochen, 83342 Tacherting (DE)
(72) Erfinder: KLIEBER, Jochen, 83342 Tacherting (DE)
(74) Vertreter: Wachenhausen & Kollegen Patentanwälte GbR

(56) Entgegenhaltungen:
- EP-A2- 2 559 567
- DE-A1- 19 731 451

## Beschreibung

### GEBIET DER ERFINDUNG:

Die Erfindung betrifft Nabentechnik. Insbesondere betrifft die Erfindung eine Fahrradnabe nach dem Oberbegriff des Anspruchs 1, ein Laufrad sowie ein Fahrrad mit einer solchen Fahrradnabe

Eine gattungsbildende Fahrradnabe ist aus DE 19731451 A bekannt.

### TECHNOLOGISCHER HINTERGRUND

Die Fahrradnabe ist das Zentrum eines jeden Laufrades im Fahrrad. Sie dreht sich beim Laufrad eines Fahrrades um eine fest in den Ausfallenden eingespannte Achse. Die wesentlichen Bestandteile einer Fahrradnabe sind die Achse, das Lager und das Nabengehäuse. Je nach Ausführung kann die Nabe mit zusätzlichen Elementen wie Bremse oder Freilauf ergänzt sein. Grundsätzlich sind am Nabengehäuse die Speichen befestigt. Darüber hinaus wird prinzipiell zwischen Vorderradnaben und Hinterradnaben unterschieden. Im Kontext der vorliegenden Erfindung umfasst der Begriff Fahrradnabe sowohl eine Vorderradnabe als auch eine Hinterradnabe.

Langjährige Erfahrungen der Anmelderin habe gezeigt, dass fast alle Lagerschäden in Fahrradnaben auf falsch eingestelltem Lagerspiel beruhen. Durch heutige Steckachsen und ihre hohen Klemmkräfte werden alle Nabenachsen gestaucht. Dabei handelt es sich zwar lediglich um Zehntel Millimeter, es entwickeln sich jedoch, wenn zuvor kein Spiel vorhanden war, augenblicklich seitliche Druckkräfte von bis zu 900 kg auf die Lager. Dieser Belastung, die immerhin mehr als dem Zehnfachen eines durchschnittlichen Fahrergewichts entspricht, kann kein Nabenlager lange standhalten. Zumal die Lager nicht für seitliche Kräfte ausgelegt sind. Im Stand der Technik werden in Naben daher extrem schwere Achsen gegen die Stauchung oder Gummielemente zum Spielausgleich eingesetzt, wobei hier immer noch Druck auf die Lager erzeugt wird.

### ZUSAMMENFASSUNG DER ERFINDUNG

Es kann als eine Aufgabe der Erfindung angesehen werden, eine verbesserte Fahrradnabe, insbesondere mit verbesserter Einstellbarkeit des Achsspiels der Nabenachse bzw. des Lagerspiels, anzugeben.

Es sind eine Fahrradnabe, ein Laufrad und ein Fahrrad gemäß den Merkmalen der unabhängigen Ansprüche angegeben. Weiterbildungen der Erfindung ergeben sich aus den Unteransprüchen und aus der folgenden Beschreibung.

Die beschriebenen Ausführungsbeispiele betreffen gleichermaßen die Fahrradnabe, das Laufrad und das Fahrrad.

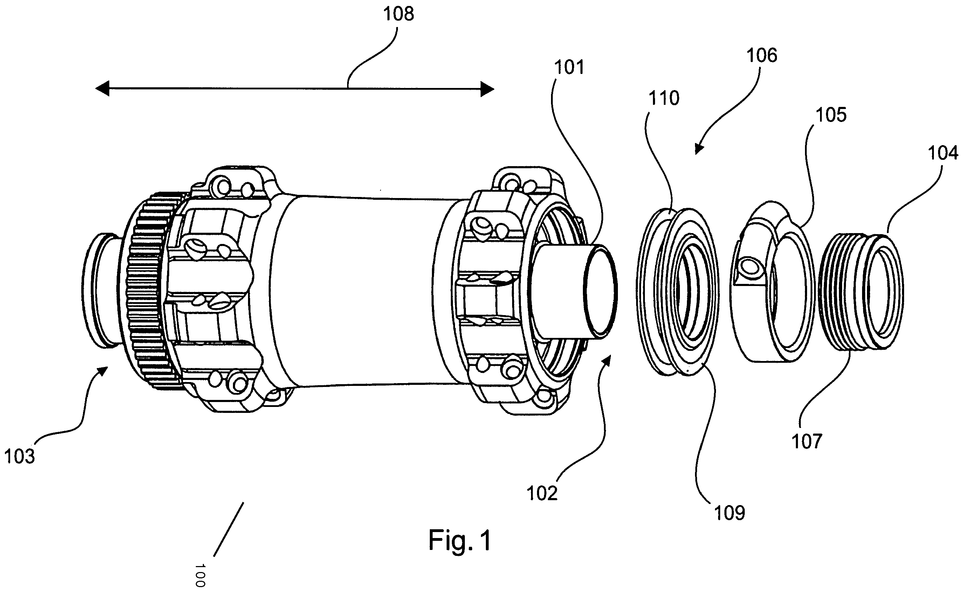

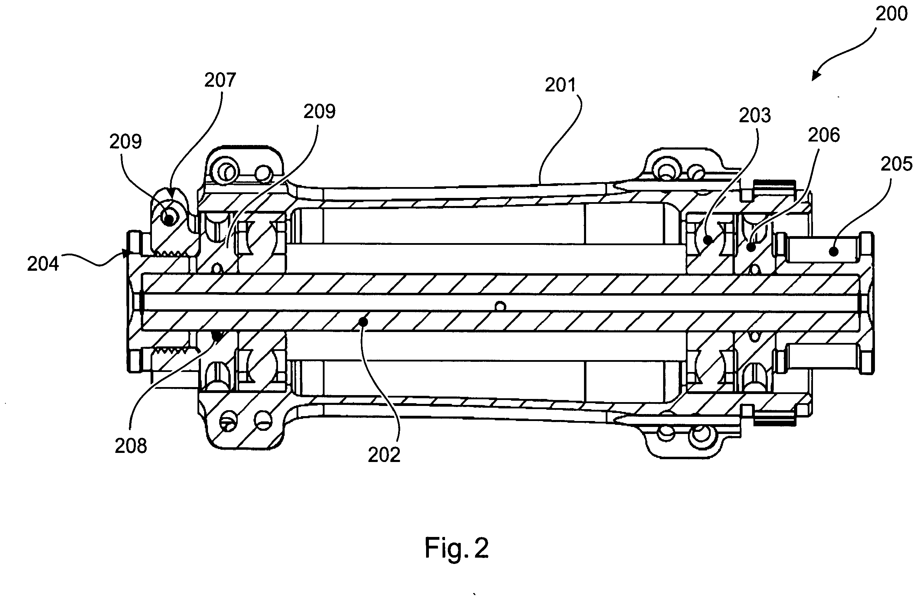

Gemäß der Erfindung ist eine Fahrradnabe mit einer Achse mit einem ersten Achsende und einem zweiten Achsende angegeben. Die Fahrradnabe weist eine erste Achsendkappe auf, welche am ersten Achsende der Achse befestigt ist. Ebenso ist ein erster Dichtapparat zum Schutz eines Nabeninneren vor Schmutz und Wasser enthalten. Die Fahrradnabe weist weiterhin ein erstes Nabenlager und eine geschlitzte Klemme auf. Die erste Achsendkappe weist ein Außengewinde auf, an welchem die geschlitzte Klemme über ein Innengewinde angeordnet bzw. befestigt ist. An die geschlitzte Klemme, welche an der ersten Achsendkappe befestigt ist, schließt sich in axialer Richtung von außen nach innen der erste Dichtapparat an. Darüber hinaus schließt sich in axialer Richtung von außen nach Innen an den ersten Dichtapparat das erste Nabenlager an. Mit anderen Worten stellt die erfindungsgemäße Fahrradnabe eine zwei Komponenten-Lösung zur Einstellung des Lagerspiels und zum schmutz- und wasserfesten Verschluss des Nabeninneren bereit. In der erfindungsgemäßen Fahrradnabe werden also die beiden Komponenten des ersten Dichtapparats und der geschlitzten Klemme als separate Komponenten bereitgestellt. Dies hat vorteilhafterweise zum Vorteil, dass der Dichtapparat nicht mehr als Achsendkappe ausgeführt sein muss. Weiterhin ist die geschlitzte Klemme nicht im unmittelbaren Kontakt mit dem Lager der Nabe, da sich dazwischen der separate erste Dichtapparat befindet. Eine solche geometrische, beispielhafte Anordnung kann den Ausführungsbeispielen der Fig. 1 und 2 entnommen werden.

Insbesondere erlaubt die erfindungsgemäße Fahrradnabe mit der Funktionstrennung durch die separaten Komponenten des ersten Dichtapparats und der geschlitzten Klemme, dass die geschlitzte Klemme ohne Dichtlippen ausgeführt sein kann. Ebenso kann vorteilhafterweise der erste Dichtapparat als ungeschlitzter ringförmiger Dichtapparat ausgeführt sein. Dadurch wird einerseits der gewünschte, vollständige Verschluss des Nabeninneren hin zur Umwelt der Fahrradnabe mittels des ungeschlitzten Dichtapparats erreicht. Andererseits kann aber auch mittels der separaten geschlitzten Klemme die vorteilhafte Einstellung des Lagerspiels ohne große Bemühungen erreicht werden.

Gemäß einer Ausführungsform der Erfindung ist die geschlitzte Klemme als geschlitzter Klemmring ausgeführt ist. Ebenso sind die geschlitzte Klemme und der erste Dichtapparat als zwei separate Bauteile ausgeführt.

Gemäß einer weiteren Ausführungsform der Erfindung weist der erste Dichtapparat zwei Dichtlippen auf und die geschlitzte Klemme weist keine Dichtlippe auf. Vorzugsweise wird der erste Dichtapparat als ungeschlitzter Ring ausgeführt. Durch die Trennung des ringförmigen Dichtapparats von der geschlitzten Klemme ist es möglich, dass kein unmittelbarer Kontakt zwischen der geschlitzten Klemme und dem Nabenlager besteht. Dies erhöht den Verschluss der Fahrradnabe und vermindert die Verschmutzung im Inneren der Nabe über den Schlitz in der Klemme.

In einer Ausführungsform ist der erste Dichtapparat einteilig oder als zweiteilige Dichtscheiben ausgeführt. Insbesondere in der einteiligen Ausführung kann der erste Dichtapparat eine erste und eine zweite Dichtlippe aufweisen.

In einer Ausführungsform der vorliegenden Erfindung sind die erste Achsendkappe und die geschlitzte Klemme dazu ausgeführt, eine Einstellung eines Lagerspiels des ersten Nabenlagers zu ermöglichen.

Gemäß einer weiteren Ausführungsform der Erfindung weist die Fahrradnabe am zweiten Achsende eine zweite Achsendkappe auf. Ebenso weist die Fahrradnabe ein zweites Nabenlager auf. Ebenso ist ein zweiter Dichtapparat an der Fahrradnabe vorhanden. Darüber hinaus schließt sich in axialer Richtung an die zweite Achsendkappe der zweite Dichtapparat an und es schließt sich in axialer Richtung an den zweiten Dichtapparat das zweite Nabenlager an. In einer weiteren Ausführungsform ist die zweite Achsendkappe ungeschlitzt.

Die Erfindung betrifft auch ein Laufrad mit einer Fahrradnabe gemäß einer der zuvor oder im Nachgang genannten Fahrradnabe.

Die Erfindung betrifft ferner alternativ ein Fahrrad mit einer Fahrradnabe gemäß einer der zuvor oder im Nachgang genannten Fahrradnabe.

Im Folgenden werden mit Verweis auf die Figuren Ausführungsbeispiele der Erfindung beschrieben.

### KURZE BESCHREIBUNG DER FIGUREN

Fig. 1 zeigt eine schematische, dreidimensionale Darstellung einer Fahrradnabe gemäß einem Ausführungsbeispiel der Erfindung.
Fig. 2 zeigt eine schematische, zweidimensionale Querschnittsdarstellung einer Fahrradnabe gemäß einem Ausführungsbeispiel der Erfindung.

In den folgenden Figurenbeschreibungen können für die gleichen oder ähnlichen Elemente die gleichen oder ähnlichen Bezugsziffern verwendet werden.

Die Darstellungen in den Figuren sind schematisch und nicht maßstäblich.

### DETAILLIERTE BESCHREIBUNG VON AUSFÜHRUNGSBEISPIELEN

Fig. 1 zeigt eine Fahrradnabe 100, welche eine Achse 101 mit einem ersten Achsende 102 und einem zweiten Achsende 103 aufweist. Die Fahrradnabe 100 weist weiterhin eine erste Achsendkappe 104 auf, die am ersten Achsende 102 befestigt ist. Ebenso weist die Fahrradnabe 100 einen ersten Dichtapparat 106 zum Schutz eines Nabeninneren vor Schmutz und Wasser auf. Die Fahrradnabe 100 weist darüber hinaus ein erstes Nabenlager auf. Ebenso ist in Fig. 1 die geschlitzte Klemme 105 der Fahrradnabe 100 gezeigt. Die geschlitzte Klemme 105 ist über ein Innengewinde an dem Außengewinde 107 der ersten Achsendkappe 104 angeordnet bzw. befestigt. Wie der Fig. 1 zu entnehmen ist, schließt sich in axialer Richtung 108 an die Achsendkappe 104 und die daran befestigte, geschlitzte Klemme 105 der erste Dichtapparat 106 an. Ebenso schließt der erste Dichtapparat 106 an das erste Nabenlager der Fahrradnabe 100 an.

Wie dem Ausführungsbeispiel der Fig. 1 entnommen werden kann, sind der erste Dichtapparat 106 und die geschlitzte Klemme 105 als zwei separate Bauteile bereitgestellt. Diese Trennung verhindert, dass Schmutz und/oder Wasser durch den Schlitz der geschlitzten Klemme 105 in das Nabeninneren der Nabe 100 vordringt. Die geschlitzte Klemme 105 ist hier als geschlitzter Klemmring ausgeführt, der beispielsweise mittels einer Inbusschraube die gewünschte Klemmung hervorrufen kann. Jedoch können auch andere Mechanismen zur Verursachung der Klemmung verwendet werden. Der erste Dichtapparat 106 weist zwei Dichtlippen 109 und 110 auf und es ist deutlich zu erkennen, dass die geschlitzte Klemme 105 keine Dichtlippe aufweist. Mit anderen Worten ist die Funktionalität der Abdichtung der Nabe vollständig durch den ersten Dichtapparat 106 bereitgestellt, wohingegen die Einstellung des Lagerspiels vollständig und baulich getrennt durch die geschlitzte Klemme 105 erfolgt. Zur vollständigen Abdichtung der Nabe 100 weist der erste Dichtapparat 106 keinen durchgehenden Schlitz auf. Ebenso ist die geschlitzte Klemme 105 nicht im unmittelbaren Kontakt mit dem ersten Nabenlager der Nabe 100, da sich dazwischen der erste Dichtapparat 106 befindet.

Fig. 2 zeigt eine Fahrradnabe 200 gemäß einem weiteren Ausführungsbeispiel der vorliegenden Erfindung. Die Fahrradnabe 200 weist einen Körper 201 sowie eine Nabenachse 202 auf. Darüber hinaus ist das Nabenlager 203 im Ausführungsbeispiel der Fig. 2 als Kugellager ausgeführt. Die Nabe 200 weist weiterhin die erste Achsendkappe 204 auf. An der gegenüberliegenden Seite ist die zweite Achsendkappe 205 gezeigt. Im Ausführungsbeispiel ist der erste Dichtapparat 209 auf der linken Seite gezeigt und ein entsprechender zweiter Dichtapparat ist auf der rechten Seite mit Bezugszeichen 206 gezeigt. Der erste Dichtapparat 209 weist einen O-Ring 208 zur Abdichtung des Kugellagers der Nabe 200 auf. Die geschlitzte Klemme 207 weist zur Verursachung der Klemmung eine Zylinderschraube 209 auf, welche hier auch im Querschnitt dargestellt ist.

## Patentansprüche

1. Fahrradnabe (100, 200) aufweisend
eine Achse (101) mit einem ersten Achsende (102) und einem zweiten Achsende (103),
eine erste Achsendkappe (104), welche am ersten Achsende (102) befestigt ist,
einen ersten Dichtapparat (106) zum Schutz eines Nabeninneren vor Schmutz und Wasser,
ein erstes Nabenlager, **dadurch gekennzeichnet, dass** die Fahrradnabe zusätzlich eine geschlitzte Klemme (105) aufweist, wobei die erste Achsendkappe (104) ein Außengewinde (107) aufweist, an welchem die geschlitzte Klemme (105) über ein Innengewinde angeordnet ist, und
wobei sich in axialer Richtung (108) an die an der ersten Achsendkappe (104) befestigte geschlitzte Klemme (105) der erste Dichtapparat (106) anschließt und sich in axialer Richtung (108) an den ersten Dichtapparat (106) das erste Nabenlager anschließt.

2. Fahrradnabe nach Anspruch 1,
wobei die geschlitzte Klemme als geschlitzter Klemmring ausgeführt ist, und
wobei die geschlitzte Klemme und der erste Dichtapparat als zwei separate Bauteile ausgeführt sind.

3. Fahrradnabe nach einem der vorhergehenden Ansprüche,
wobei der erste Dichtapparat zwei Dichtlippen (109, 110) aufweist, und
wobei die geschlitzte Klemme keine Dichtlippe aufweist.

4. Fahrradnabe nach einem der vorhergehenden Ansprüche,
wobei der erste Dichtapparat ungeschlitzt ist.

5. Fahrradnabe nach einem der vorhergehenden Ansprüche,
wobei die geschlitzte Klemme keinen unmittelbaren Kontakt zum ersten Nabenlager hat.

6. Fahrradnabe nach einem der vorhergehenden Ansprüche,
wobei der erste Dichtapparat einteilig oder als zweiteilige Dichtscheiben ausgeführt ist.

7. Fahrradnabe nach einem der vorhergehenden Ansprüche,
wobei die erste Achsendkappe und die geschlitzte Klemme dazu ausgeführt sind, eine Einstellung eines Lagerspiels des ersten Nabenlagers zu ermöglichen.

8. Fahrradnabe nach einem der vorhergehenden Ansprüche, weiterhin aufweisend
eine zweite Achsendkappe, welche am zweiten Achsende befestigt ist,
ein zweites Nabenlager,
einen zweiten Dichtapparat, und
wobei sich in axialer Richtung an die zweite Achsendkappe der zweite Dichtapparat anschließt und sich in axialer Richtung an den zweiten Dichtapparat das zweite Nabenlager anschließt.

9. Fahrradnabe nach einem der vorhergehenden Ansprüche,
wobei die zweite Achsendkappe ungeschlitzt ist.

10. Laufrad oder Fahrrad mit einer Fahrradnabe nach einem der vorhergehenden Ansprüche.

## Claims

1. Bicycle hub (100, 200) comprising
an axle (101) with a first axle end (102) and a second axle end (103),
a first axle end cap (104), which is attached to the first axle end (102),
a first sealing device (106) for protecting a hub interior from dirt and water,
a first hub bearing,
**characterized in that** the bicycle hub additionally comprises a slotted clamp (105),
wherein the first axle end cap (104) comprises an external thread (107) at which the slotted clamp (105) is arranged via an internal thread, and
wherein in an axial direction (108) the first sealing device (106) follows the slotted clamp (105) attached to the first axle end cap (104), and the first hub bearing follows, in the axial direction (108), the first sealing device (106).

2. Bicycle hub according to claim 1,
wherein the slotted clamp is configured as a slotted clamp ring, and
wherein the slotted clamp and the first sealing device are configured as two separate components.

3. Bicycle hub according to one of the preceding claims, wherein the first sealing device comprises two sealing lips (109, 110), and wherein the slotted clamp does not comprise a sealing lip.

4. A bicycle hub according to one of the preceding claims, wherein the first sealing device is unslotted.

5. Bicycle hub according to one of the preceding claims,
wherein the slotted clamp is not in direct contact with the first hub bearing.

6. Bicycle hub according to one of the preceding claims,
wherein the first sealing device is configured as single-piece or as a two-piece sealing disk.

7. Bicycle hub according to one of the preceding claims,
wherein the first axle end cap and the slotted clamp are configured to enable a setting of a bearing clearance of the first hub bearing.

8. A bicycle hub according to one of the preceding claims, further comprising
a second axle end cap, which is attached to the second axle,
a second hub bearing,
a second sealing device, and
wherein in the axial direction the second sealing device follows the second axle end cap, and in the axial direction the second hub bearing follows the second sealing device.

9. Bicycle hub according to one of the preceding claims, wherein the second axle end cap is unslotted.

10. Wheel or bicycle with a bicycle hub according to one of the preceding claims.

## Revendications

1. Moyeu de bicyclette (100, 200) présentant
un axe (101) avec un premier bout d'axe (102) et un deuxième bout d'axe (103),
un embout d'axe (104) qui est fixé au premier bout d'axe (102),
un premier dispositif d'étanchéité (106) pour protéger un intérieur du moyeu contre la saleté et l'eau,
un premier palier de moyeu, **caractérisé en ce que** le moyeu de bicyclette présente en outre un collier fendu (105),
le premier embout d'axe (104) présentant un filetage extérieur (107) sur lequel le collier fendu (105) est disposé par le biais d'un filetage intérieur, et
le premier dispositif d'étanchéité (106) se raccordant dans la direction axiale (108) au collier fendu (105) fixé au premier embout d'axe (104) et le premier palier de moyeu se raccordant dans la direction axiale (108) au premier dispositif d'étanchéité (106).

2. Moyeu de bicyclette selon la revendication 1, dans lequel le collier fendu est réalisé sous forme de bague de serrage fendue et
le collier fendu et le premier dispositif d'étanchéité sont réalisés sous forme de deux composants séparés.

3. Moyeu de bicyclette selon l'une quelconque des revendications précédentes, dans lequel le premier dispositif d'étanchéité présente deux lèvres d'étanchéité (109, 110), et le collier fendu ne présente pas de lèvre d'étanchéité.

4. Moyeu de bicyclette selon l'une quelconque des revendications précédentes, dans lequel le premier dispositif d'étanchéité n'est pas fendu.

5. Moyeu de bicyclette selon l'une quelconque des revendications précédentes, dans lequel le collier fendu ne présente pas de contact direct avec le premier palier de moyeu.

6. Moyeu de bicyclette selon l'une quelconque des revendications précédentes, dans lequel le premier dispositif d'étanchéité est réalisé d'une seule pièce ou sous forme de rondelles d'étanchéité en deux parties.

7. Moyeu de bicyclette selon l'une quelconque des revendications précédentes, dans lequel le premier embout d'axe et le collier fendu sont réalisés de manière à permettre un ajustement d'un jeu de palier du premier palier de moyeu.

8. Moyeu de bicyclette selon l'une quelconque des revendications précédentes, présentant en outre
un deuxième embout d'axe, lequel est fixé sur le deuxième embout d'axe,
un deuxième palier de moyeu,
un deuxième dispositif d'étanchéité, et
le deuxième dispositif d'étanchéité se raccordant dans la direction axiale au deuxième embout d'axe et le deuxième palier de moyeu se raccordant dans la direction axiale au deuxième dispositif d'étanchéité.

9. Moyeu de bicyclette selon l'une quelconque des revendications précédentes, dans lequel le deuxième embout d'axe n'est pas fendu.

10. Draisienne ou bicyclette comprenant un moyeu de bicyclette selon l'une quelconque des revendications précédentes.
